# EUROPÄISCHE PATENTSCHRIFT

(11) **EP 0 789 163 B1**
(45) Veröffentlichungstag und Bekanntmachung des Hinweises auf die Patenterteilung: **10.10.2001**
(21) Anmeldenummer: 96117921.5
(22) Anmeldetag: 08.11.1996
(51) Int. Cl.: F16F 15/14, F16F 7/10

(54) **Drehzahladaptiver Tilger**
Rotational speed adapted damper
Amortisseur adapté de vélocité rotative

(30) Priorität: 06.02.1996 DE 19604160
(43) Veröffentlichungstag der Anmeldung: 13.08.1997
(73) Patentinhaber: Firma Carl Freudenberg, 69469 Weinheim (DE)
(72) Erfinder: Eckel, Hans-Gerd, Dr., 69514 Laudenbach (DE); Kunkel, Anja, 69483 Siedelsbrunn (DE)

(56) Entgegenhaltungen:
- FR-A- 773 520
- FR-A- 1 000 629
- FR-A- 1 045 551
- GB-A- 444 222
- US-A- 2 276 301
- US-A- 2 383 516

## Beschreibung

Die Erfindung betrifft einen drehzahladaptiven Tilger, umfassend ein um eine Rotationsachse verdrehbares Nabenteil sowie mehrere Trägheitsmassen, die um von der Rotationsachse beabstandete Schwenkachsen in Richtung der Rotationsbewegung schwenkbar sind, wobei jede Trägheitsmasse durch zwei in Umfangsrichtung beabstandete, sich parallel zur Rotationsachse erstreckende Bolzen in dem Nabenteil gelagert ist und wobei die Bolzen auf Kurvenbahnen abrollbar sind, die im Bereich des Nabenteils ein U-förmig in Richtung der Rotationsachse und im Bereich der Trägheitsmassen ein U-förmig in entgegengesetzter Richtung geöffnetes Profil haben.

Ein solcher Tilger ist aus der GB PS 598811 bekannt. Die Kurvenbahnen werden dabei durch Teilbereiche der Wandung von Bohrungen gebildet, die einen erheblich größeren Durchmesser haben als die Bolzen. Bei Einleitung von Drehschwingungen in einen solchen Drehschwingungstilger wälzen sich die Bolzen auf den die Bohrungen begrenzenden Wandungen, die die Kurvenbahnen bilden, ab, was dazu führt, daß sich der Abstand zwischen einer jeden Trägheitsmasse und der Rotationsachse im Verlauf einer jeden Einzel-Schwingung ständig verändert. Ein solcher Tilger hat eine der Drehzahl proportionale Eigenfrequenz, so daß Drehschwingungen mit Frequenzen, die der Drehzahl proportional sind, im gesamten Drehzahlbereich tilgbar sind. Derartige der Drehzahl proportionale Frequenzen haben alle periodisch arbeitenden Maschinen, wie z.B. die Verbrennungsmotoren von Kraftfahrzeugen.

Bei dem bekannten, drehzahladaptiven Tilger werden die Bolzen und die Kurvenbahnen bei nur drehender Welle aufeinander gepreßt. Sämtliche Trägheitsmassen umkreisen die Rotationsachse bei gleichförmig drehender Welle stets im größtmöglichen Abstand. Dieser Zustand wird jedoch gestört, wenn die Drehbewegung zum Erliegen kommt. Unter dem Einfluß der Gravitation verlagern sich dann sämtliche Teile hin zu einer Stelle, an der sie den kleinstmöglichen Abstand vom Erdmittelpunkt haben. Die in Umfangsrichtung des drehzahladaptiven Tilgers verteilten Trägheitsmassen und Bolzen haben somit in diesem Zustand Abstände von der Rotationsachse, die voneinander verschieden sind.

Bei drehzahladaptiven Tilgern, die sich gelegentlich in einer Drehbewegung und gelegentlich in einem ruhenden Zustand befinden, macht sich der Übergang vom drehenden in den ruhenden Zustand insofern unangenehm bemerkbar, als sich die gerade auf der vom Erdmittelpunkt abgewandten Seite der Rotationsachse befindlichen Trägheitsmassen plötzliche herabfallen, wobei die Bolzen in der Bohrung plötzliche auf die jeweils gegenüberliegende, metallische Wandung aufschlagen. Dabei ergeben sich metallische Anschlaggeräusche. Der gleiche Effekt ist beim Einsetzen der Drehbewegung nach vorausgegangenem Stillstand zu beobachten.

Der Erfindung liegt die Aufgabe zugrunde, einen drehzahladaptiven Tilger der eingangs genannten Art derart weiterzuentwickeln, daß die Lagerung der Trägheitsmassen am Anfang und am Ende einer Drehbewegung nicht mehr zu einer unzulässigen Geräuschbildung führen kann.

Diese Aufgabe wird erfindungsgemäß bei einem drehzahladaptiven Tilger der eingangs genannten Art dadurch gelöst, daß die Bolzen auch auf den von den jeweiligen Kurvenbahnen abgewandten Seiten durch eine Führungsbahn geführt sind. Die Bolzen werden durch die Führungsbahnen auf der von den Kurvenbahnen abgewandten Seite nach Überwindung eines geringen Spiels bereits abgestützt, bevor sich eine große Relativgeschwindigkeit ergibt. Das Auftreten von Anschlaggeräuschen läßt sich dadurch unter allen in Frage kommenden Betriebsbedingungen auf akzeptable Werte begrenzen.

Um die Sicherheit gegen betriebsbedingte Anschlaggeräusche noch weiter zu verbessern, hat es sich als vorteilhaft bewährt, wenn die Führungsbahnen aus polymerem Werkstoff bestehen, beispielsweise aus Polyurethan oder Polyamid.

Es ist auch möglich, einen elastomeren Werkstoff zu verwenden. Durch die elastischen Eigenschaften resultiert bei einer solchen Ausbildung eine besonders hochgradige Dämpfung von Anschlaggeräuschen.

Die Dämpfungsschichten können in Umfangsrichtung beiderseits in Anschlagflächen enden, durch die die Umfangsbeweglichkeit der Bolzen auf einen festen Wert begrenzt ist. Die resultierende Öffnung, in der ein jeder Bolzen beweglich ist, ist von nierenförmigem Umriß. Sie wird in einem ersten Teilbereich durch die Kurvenbahnen begrenzt, auf der die Bolzen abrollbar sind, in einem zweiten Teilbereich durch die Führungsbahnen, durch die die Bolzen beim Nichtdrehen des Drehschwingungstilgers abstützbar sind und in Umfangsrichtung beiderseits durch die Anschlagflächen, die die Umfangsbeweglichkeit des Bolzens begrenzen. Sämtliche Teilflächen gehen idealerweise unter Vermeidung von sprunghaften Richtungsänderungen kontinuierlich ineinander über.

Die Kurvenbahnen und die Führungsbahnen können Bestandteile von Einsatzteilen bilden, die in Ausnehmungen des Nabenteils und/oder der Trägheitsmassen einclipsbar sind. Sie können hinsichtlich der Größe und Dimensionierung in Abhängigkeit von dem jeweiligen Anwendungsfall modifiziert sein und lassen es zu, den jeweiligen Tilger einem bestimmten Anwendungsfall in gezielter Weise anzupassen. Die Montage ist sehr einfach. Sie kann auch durch einfaches Einstecken in die Ausnehmungen erfolgen und die zusätzliche Verwendung von Klebstoffen, Verschraubungen und/oder Nieten einbeziehen.

Es hat sich als besonders vorteilhaft bewährt, wenn die Dämpfungsschicht durch unmittelbares Anformen und Verfestigen des sie bildenden Werkstoffkörpers mit den die Kurvenbahnen tragenden Einsatzstücken und Ausnehmungen verbunden ist. Dabei ergibt sich der sekundäre Vorteil einer gegenseitigen Verklebung, eines Toleranzausgleichs zwischen den Einsatzstücken und den Ausnehmungen sowie eine wackelsichere Festlegung der Einsatzstücke in den Ausnehmungen. Die Einbringung und Verfestigung des die Dämpfungsschicht bildenden Werkstoffkörpers kann beispielsweise im Zuge eines Spritzprozesses erfolgen.

Der Gegenstand der Erfindung wird nachfolgend anhand der Zeichnungen weiter verdeutlicht. Es zeigen:
- Figur 1:: Eine Bauform eines drehzahladaptiven Tilgers in einer Ansicht von vorn
- Figur 2:: Ein Einsatzteil zum Einfügen in das Nabenteil bzw. die Tilgermassen des drehzahladaptiven Tilgers nach Figur 1
- Figur 3:: Einen drehzahladaptiven Tilger in quergeschnittener Darstellung

Der in den Zeichnungen wiedergegebene drehzahiadaptive Tilger umfaßt ein um eine Rotationsachse verdrehbares Nabenteil 1 sowie mehrere Trägheitsmassen 2, die um von der Rotationsachse 3 beabstandete Schwenkachsen der Rotationsbewegung 4 mehr oder weniger folgend schwenkbar sind, wobei jede Trägheitsmasse 2 durch zwei in Umfangsrichtung beabstandete, sich parallel zur Rotationsachse 3 erstreckende Bolzen 5 in dem Nabenteil gelagert ist und wobei die Bolzen 5 auf Kurvenbahnen 6 abrollbar sind, die im Bereich des Nabenteils 1 ein U-förmig in Richtung der Rotationsachse 3 und im Bereich der Trägheitsmassen 2 ein U-förmig in die entgegengesetzte Richtung geöffnetes Profil haben. Die Bolzen 5 werden auf den von den jeweiligen Kurvenbahnen 6 abgewandten Seiten durch eine Führungsbahn 7 geführt. Diese besteht aus einer Führungsschicht 8 aus polymerem Werkstoff, beispielsweise aus Gummi. Die Führungsbahnen 7 sind beiderseits durch Anschlagflächen 9 begrenzt, die zugleich die Umfangsbeweglichkeit des jeweiligen Bolzens 5 auf einen festen Wert begrenzen. Der Durchmesser des Bolzens 5 ist so mit dem radialen Abstand zwischen der jeweiligen Kurvenbahn 6 und der zugehörigen Führungsbahn 7 abgestimmt, daß kein oder zumindest kein nennenswertes Spiel vorhanden ist.

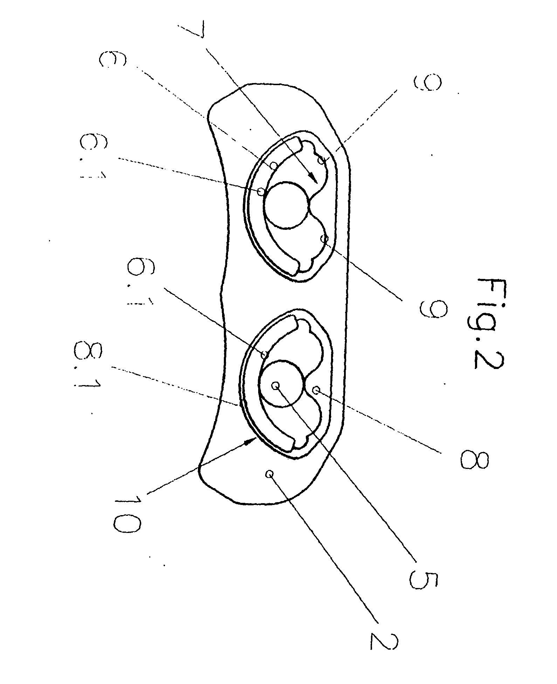

Die Kurvenbahnen 6 und die Führungsbahnen 7 bilden Bestandteile von Einsatzteilen, die in Ausnehmungen 10 des Nabenteils 1 und der Trägheitsmassen 2 unverlierbar aufgenommen sind, beispielsweise durch Einclipsen. Der Umfang der Ausnehmungen 10 in den Trägheitsmassen (2) gemäß Figur 2 wird durch eine gestrichelte Linie angedeutet. Die Trägheitsmassen 2 können auch einen von Figur 2 abweichenden Umriß haben, beispielsweise einen rechteckig begrenzten Umriß. Die Herstellung ist bei einer entsprechenden Ausbildung zwar einfacher, jedoch ergibt sich zwangsläufig ein gewisser Verlust hinsichtlich der Größe der theoretisch erreichbaren Tilgermasse.

Die die Kurvenbahnen 6 bildenden Einsatzstücke 6.1/6.2 können auch lose die Ausnehmungen 10 eingefügt und durch nachträgliches Einformen der die Führungsbahnen 7 tragenden Dämpfungsschichten 8 mit den Ausnehmungen 10 und den Einsatzstücken 6.1 verklebt sein (Fig. 2). Dabei ergibt sich nicht nur ein wackelsicherer, spielfreier Sitz der Einsatzstücke 6.1 sondern darüber hinaus eine absolut präzise Zuordnung der Kurven- und Führungsbahnen 6,7 zu den Trägheitsmassen 2 bzw. zu der Rotationsachse des Nabenteils 1. Dem Auftreten von unerwünschten Unwuchterscheinungen während der Rotation des Tilgers läßt sich dadurch begegnen. Als besonders zweckmäßig hat es sich erwiesen, wenn die Einsatzstücke durch Strangpressen erzeugt sind. Sie verfügen hierdurch über eine ausgezeichnete Oberflächenqualität. Die Ausnehmungen können demgegenüber durch einen Stanzprozeß erzeugt sein. Die dabei zu beobachtenden Oberflächenungenauigkeiten werden beim Einformen des die Dämpfungsschichten 8 bildenden Werkstoffkörpers selbsttätig ausgeglichen.

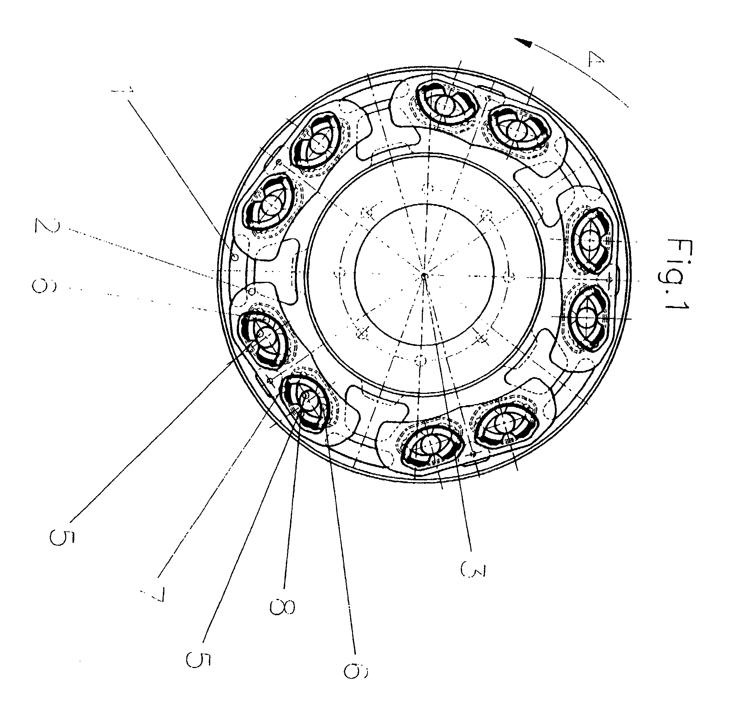

Bei dem gezeigten Ausführungsbeispiel nach den Figuren 1 bis 3 wird der Nabenteil 1 im Bereich seines Außenumfangs durch einen Flansch gebildet, dem die Trägheitsmassen 2 in axialer Richtung beiderseits benachbart sind. Die Trägheitsmassen 2 sind in dem Nabenteil 1 auf Bolzen 5 gelagert, die auf den von den jeweiligen Kurvenbahnen 6 abgewandten Seiten radial durch eine Führungsbahn 7 geführt und in radialer Richtung abgestützt sind.

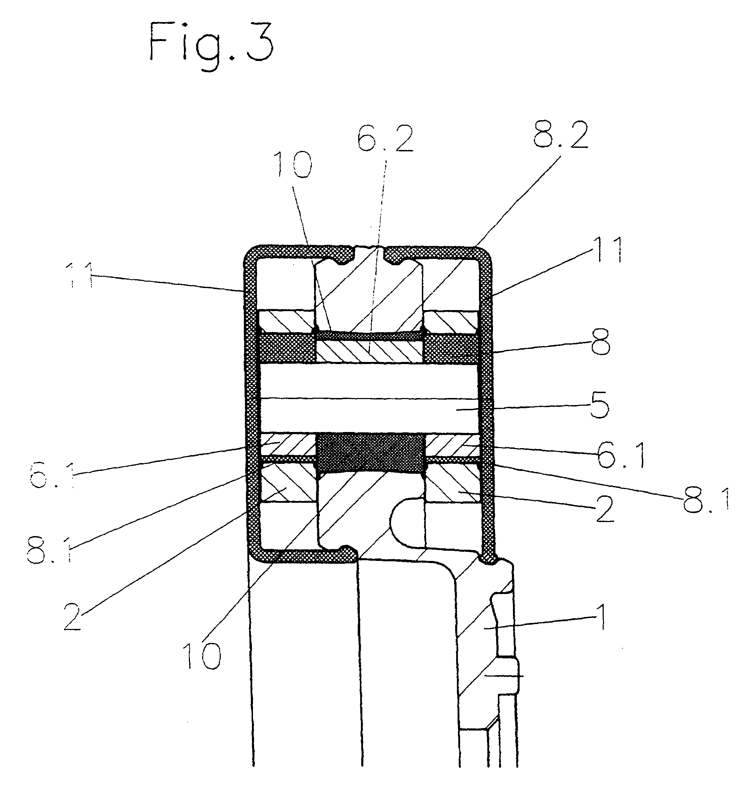

Die Bolzen 5 sind von zylindrischer Gestalt. Sie können bedarfsweise durch Rohre gebildet sein. Um ein Herausfallen in axialer Richtung zu verhindern, sind Kappen 11 aus Kunststoff vorgesehen, die unverrückbar an dem Nabenteil 1 festgelegt sind und die Bolzen 5 im Bereich der beiden Enden überdecken. In dem verbleibenden Freiraum 12 sind zugleich die Trägheitsmassen 2 aufgenommen. Sie werden neben den Bolzen 5 durch die Kappen 11 daran gehindert, eine, bezogen auf Figur 3, abweichende Zuordnung zu dem Nabenteil 1 in axialer Richtung einzunehmen. Die Kappen 11 können auch aus Metall bestehen.

Die sich während der bestimmungsgemäßen Verwendung des gezeigten drehzahladaptiven Tilgers ergebende Funktion besteht darin, daß sich eine Abwälz-Bewegung der Bolzen 5 auf den Kurvenbahnen 6 ergibt mit der Folge, daß sich der radiale Abstand zwischen den Trägheitsmassen 2 und der Rotationsachse 3 stetig verändert. Die Folge ist eine Tilgerwirkung, die im gesamten Drehzahlbereich verfügbar ist.

## Patentansprüche

1. Drehzahladaptiver Tilger, umfassend einen um eine Rotationsachse drehbaren Nabenteil (1) sowie mehrere Trägheitsmassen (2), die um von der Rotationsachse (3) beabstandete Schwenkachsen der Rotationsbewegung (4) folgend schwenkbar sind, wobei jede Tilgermasse (2) durch zwei in Umfangsrichtung beabstandete, sich parallel zur Rotationsachse (3) erstreckende Bolzen (5) in dem Nabenteil (1) gelagert ist und wobei die Bolzen (5) auf Kurvenbahnen (6) abrollbar sind, die im Bereich des Nabenteils (1) ein U-förmig in Richtung der Rotationsachse (3) und im Bereich der Trägheitsmassen (2) ein U-förmig in die entgegengesetzter Richtung geöffnetes Profil haben, **dadurch gekennzeichnet, daß** die Bolzen (5) auch auf den von den jeweiligen Kurvenbahnen (6) abgewandten Seiten durch eine Führungsbahn (7) geführt sind.

2. Tilger nach Anspruch 1, **dadurch gekennzeichnet, daß** die Führungsbahn (7) aus einer Dämpfungsschicht (8) aus einem polymeren Werkstoff besteht.

3. Tilger nach Anspruch 2, **dadurch gekennzeichnet, daß** die Dämpfungsschicht (8) aus einem elastomeren Werkstoff bestehen.

4. Tilger nach Anspruch 2 oder 3, **dadurch gekennzeichnet, daß** die Dämpfungsschicht (8) in Umfangsrichtung beiderseits in Anschlagflächen (9) endet, durch die die Umfangsbeweglichkeit der Bolzen (5) auf einen festen Wert begrenzt ist.

5. Tilger nach einem der Ansprüche 1 bis 4, **dadurch gekennzeichnet, daß** die Kurvenbahnen (6) einen Bestandteil von Einsatzstücken (6.1/6.2) bilden.

6. Tilger nach Anspruch 5, **dadurch gekennzeichnet, daß** die Einsatzstücke (6.1/6.2) und die Dämpfungsschichten (8) einen Bestandteil von Einsatzteilen bilden, die in Ausnehmungen (10) des Nabenteils (1) und der Trägheitsmassen (2) unverrückbar aufgenommen sind.

7. Tilger nach Anspruch 6, **dadurch gekennzeichnet, daß** der die Dämpfungsschichten (8) bildende Werkstoffkörper nach dem Einfügen der Einsatzstücke (6.1) in die Ausnehmungen (10) durch unmittelbares Anformen und Verfestigen mit den Ausnehmungen (10) und den Einsatzstücke (6.1) verbunden ist.

8. Tilger nach einem der Ansprüche 5 bis 7, **dadurch gekennzeichnet, daß** ein Freiraum zwischen der Tilgermasse (2) bzw. Nabe (1) und den Einsatzstücken (6.1/6.2) vorhanden ist und daß der Freiraum mit dem Werkstoff der Dämpfungsschicht gefüllt ist und eine Toleranzausgleichsschicht (8.1, 8.2) bildet.

9. Tilger nach Anspruch 8, **dadurch gekennzeichnet, daß** die Toleranzausgleichsschicht (8.1, 8.2) und die Dämpfungsschicht einstückig ineinander übergehend ausgebildet sind.

10. Tilger nach einem der Ansprüche 5 bis 7, **dadurch gekennzeichnet, daß** die Einsatzstücke (6.1) durch Strangpressen erzeugt sind.

## Claims

1. A speed-adaptive absorber comprising a hub part (1), which can be rotated about an axis of rotation, and a plurality of inertial masses (2), which can be pivoted about pivoting axes spaced apart from the axis (3) of rotation, following the rotary motion (4), each absorber mass (2) being supported in the hub part (1) by two pins (5) spaced apart in the circumferential direction and extending parallel to the axis (3) of rotation, and the pins (5) being capable of being rolled along curved tracks (6), which have a profile that is open in a U shape in the direction of the axis (3) of rotation in the region of the hub part (1) and is open in a U shape in the opposite direction in the region of the inertial masses (2), **characterized in that** the pins (5) are also guided by a guide track (7) on the sides remote from the respective curved tracks (6).

2. An absorber according to claim 1, **characterized in that** the guide track (7) comprises a damping layer (8) composed of a polymeric material.

3. An absorber according to claim 2 **characterized in that** the damping layer (8) is composed of an elastomeric material.

4. An absorber according to claim 2 or 3, **characterized in that** the damping layer (8) ends circumferentially on both sides in stop surfaces (9), by means of which the circumferential mobility of the pins (5) is limited to a fixed value.

5. An absorber according to any one of claims 1 to 4, **characterized in that** the curved tracks (6) form part of inserts (6.1/6.2).

6. An absorber according to claim 5, **characterized in that** the inserts (6.1/6.2) and the damping layers (8) form part of inserted parts that are accommodated immovably in recesses (10) of the hub part (1) and the inertial masses (2).

7. An absorber according to claim 6, **characterized in that** the body of material forming the damping layers (8) is connected to the recesses (10) and the inserts (6.1) after the insertion of the inserts (6.1) into the recesses (10) by being moulded on directly and solidified.

8. An absorber according to any one of claims 5 to 7, **characterized in that** there is a free space between the absorber mass (2) and hub (1) and the inserts (6.1/6.2) and **in that** the free space is filled with the material of the damping layer and forms a tolerance-compensating layer (8.1, 8.2).

9. An absorber according to claim 8, **characterized in that** the tolerance-compensating layer (8.1, 8.2) and the damping layer are designed to merge integrally into one another.

10. An absorber according to any one of claims 5 to 7, **characterized in that** the inserts (6.1) are produced by extrusion.

## Revendications

1. Amortisseur adaptable à la vitesse de rotation, comprenant une partie de moyeu (1) apte à tourner autour d'un axe de rotation ainsi que plusieurs masses d'inertie (2) aptes à pivoter autour d'un axe de pivotement situé à distance de l'axe de rotation (3) en suivant le déplacement de rotation (4), chaque masse d'amortissement (2) étant montée dans la partie de moyeu (1) par deux boulons (5) disposés à distance dans la direction périphérique et s'étendant parallèlement à l'axe de rotation (3) et les boulons (5) pouvant rouler sur des pistes incurvées (6) qui présentent dans la zone de la partie de moyeu (1) un profil en forme de U ouvert en direction de l'axe de rotation (3) et dans la zone des masses d'inertie (2) un profil en forme de U ouvert dans la direction opposée, **caractérisé en ce que** sur les côtés non tournés vers chacune des pistes incurvées (6), les boulons (5) sont également guidés par une piste de guidage (7).

2. Amortisseur sera la revendication 1, **caractérisé en ce que** la piste de guidage (7) est constituée d'une couche d'amortissement (8) en un matériau polymère.

3. Amortisseur selon la revendication 2, **caractérisé en ce que** la couche d'amortissement (8) est constituée d'un matériau élastomère.

4. Amortisseur selon la revendication 2 ou 3, **caractérisé en ce que** la couche d'amortissement (8) se termine de part et d'autre dans la direction périphérique par des surfaces de butée (9) par lesquelles la mobilité périphérique des boulons (5) est limitée à une valeur fixe.

5. Amortisseur selon l'une des revendications 1 à 4, **caractérisé en ce que** les pistes incurvées (6) font partie intégrante de pièces de garniture (6.1/6.2).

6. Amortisseur selon la revendication 5, **caractérisé en ce que** les pièoes de garniture (6.1/6.2) et les couches d'amortissement (8) font partie intégrante de parties de garniture qui sont logées sans pouvoir se déplacer dans des évidements (10) de la partie de moyeu (1) et des masses d'inertie (2).

7. Amortisseur sera la revendication 6, **caractérisé en ce qu'**après l'insertion des pièces de garniture (6.1) dans les évidements (10), le corps de matière formant les couches d'amortissement (8) est relié aux évidements (10) et aux pièces de garniture (6.1) par façonnage direct et fixation.

8. Amortisseur selon l'une des revendications 5 à 7, **caractérisé en ce qu'**il existe un espace libre entre les masses d'amortissement (2) ou le moyeu (1) et les pièces de garniture (6.1/6.2), et **en ce que** l'espace libre est rempli du matériau de la couche d'amortissement et forme une couche (8.1, 8.2) de compensation des tolérances.

9. Amortisseur selon la revendication 8, **caractérisé en ce que** la couche (8.1, 8.2) de compensation des tolérances et la couche d'amortissement sont configurées de manière à se fondre l'une dans l'autre en une seule pièce.

10. Amortisseur selon l'une des revendications 5 à 7, **caractérisé en ce que** les pièces de garniture (6.1) sont fabriquées par extrusion.
